(19) Europäisches Patentamt

European Patent Office

Office européen des brevets

(11) Veröffentlichungsnummer: **0 399 385 B1**

(12) **EUROPÄISCHE PATENTSCHRIFT**

(45) Veröffentlichungstag der Patentschrift: **29.03.95**

(51) Int. Cl.⁶: **A23K 3/03**

(21) Anmeldenummer: **90109405.2**

(22) Anmeldetag: **18.05.90**

(54) **Kombinationspräparat und Verfahren zum Einsäuern von Grünfutter und Verhindern von aeroben Abbauvorgängen in Gärfutter.**

(30) Priorität: **20.05.89 DE 3916563**

(43) Veröffentlichungstag der Anmeldung:
**28.11.90 Patentblatt 90/48**

(45) Bekanntmachung des Hinweises auf die
Patenterteilung:
**29.03.95 Patentblatt 95/13**

(84) Benannte Vertragsstaaten:
**AT CH DE FR GB LI SE**

(56) Entgegenhaltungen:
**EP-A- 0 250 786**
**EP-A- 0 369 198**
**DE-A- 2 613 505**
**GB-A- 2 095 534**

**Pahlow & Honig "Das wirtschaftseigene Futter" 32/1986, Seiten 20-35 und 205-228**

(73) Patentinhaber: **SANOFI-CEVA Gesellschaft mit beschränkter Haftung**
**Kanzlerstrasse 4**
**D-40472 Düsseldorf (DE)**

(72) Erfinder: **Beck, Theodor, Dr.**
**Belgradstrasse 142**
**D-8000 München 40 (DE)**
Erfinder: **Gross, Friedrich, Dr.**
**Professor Zorn Strasse 8**
**D-8016 Grub (DE)**

(74) Vertreter: **Türk, Dietmar, Dr. rer. nat.**
**Türk, Gille, Hrabal, Leifert**
**Patentanwälte**
**Brucknerstrasse 20**
**D-40593 Düsseldorf (DE)**

EP 0 399 385 B1

**Beschreibung**

Die Erfindung betrifft ein Kombinationspräparat zum Einsäuern von Grünfutter und Verhindern von aeroben Abbauvorgängen in Gärfutter, enthaltend Alkali- und/oder Erdalkaliformiate und gegebenenfalls übliche Trägerstoffe und/oder Hilfsstoffe. Die Erfindung betrifft auch die Verwendung dieser Präparate zum Einsäuern von Grünfutter und ein Verfahren zum Einsäuern von Grünfutter und Verhindern von aeroben Abbauvorgängen im Gärfutter.

Das Einsilieren von Grünfutter hat außerordentliche wirtschaftliche Bedeutung, und es sind verschiedene Verfahren bzw. Zusatzstoffe zur Beschleunigung der Vergärung von Grünfuttermassen bzw. zur Verbesserung der Silagen vorgeschlagen worden. Für diesen Zweck sind Alkali- und/oder Erdalkaliformiate, insbesondere Calciumformiat, im Gemisch mit anderen Zusatzstoffen verwendet worden. Die Kombination mit Hexamethylentetramin ist beschrieben in DE-A-2 602 626 = US-A-4,079,150 und die Kombination mit Benzoesäure und Sulfiten in DE-A-25 07 067 = US-A-4,073,889.

Auch der Zusatz von Milchsäure erzeugenden Bakterien ist bekannt, da die Milchsäuregärung ein wesentlicher Vorgang beim Einsilieren von Grünfutter ist.

Eine gute Silage sollte am Ende der Gärung etwa 2 bis 3 Gew.-% Milchsäure enthalten. Die zugesetzten Bakterien sollten alle oder möglichst viele der im Grünfutter enthaltenen Zucker vergären können. Die Verwendung von Bakterien, die man den Silagen zusetzt, wird offenbart in OE-A-262 040.

Ein verbessertes Verfahren zum Einsäuern von Grünfutter ist in der DE-A-36 16 181 = EP-A-0 250 786 offenbart, wo Bakterienpräparate bzw. Bakterien beschrieben sind, die verbesserte Silagen liefern, insbesondere in schnellerer Zeit eine stärkere Säuerung der Silage bewirken, wobei eine Buttersäuregärung weitgehend vermieden wird. Bei diesen Bakterien handelt es sich um Lactobazillus plantarum DSM 3676 und/oder Lactobazillus plantarum DSM 3677.

Jedoch ist der Einsatz vom Impfkulturen, die unter den Bedingungen im Silobehälter bei Gärfutter eine rasche und verstärke MS-Bildung (Milchsäure-Bildung) bewirken, vielfach bei schwer silierbaren Futterarten (Leguminosen, Feuchtfutter) mit größerem Risiko behaftet.

Daneben häuften sich in den letzten Jahren die Beobachtungen, daß im Gärfutter guter Qualität unerwünschte Nachgärvorgänge einsetzten. Besonders Anwelksilagen und kohlenhydratreiche Silagen wie Mais- und Zuckerrübenblattsilagen erwärmen sich mehr oder weniger schnell, entweder schon im Gärfutterbehälter selbst an den der Luft zugänglichen Stellen oder unmittelbar nach der Auslagerung. Damit verbunden ist ein rascher Substanzabbau, die Abnahme der während der anaeroben Gärphase gebildeten organischen Säuren und eine im Gefolge des pH-Anstieges einsetzende Eiweißzersetzung. Derartiges Gärfutter bewirkt schon bei nur schwach einsetzenden Nachgärvorgängen Verdauungsschwierigkeiten, und die Futteraufnahme wird bei fortgeschrittener Erwärmung auf 40°C und darüber zumeist von den Tieren verweigert. Als Verursacher solcher nachträglich aeroben Abbauvorgänge in gut gelungenen Silagen wurden 1964 von Beck und Groß (Das wirtschaftseigene Futter 10, 4) erstmals eine Reihe spezieller Hefen mit der Fähigkeit zur Laktatassimilation erkannt. In Silagen nur mäßiger oder schlechter Qualität treten keine Nachgärerscheinungen auf, da bereits geringe Mengen Buttersäure die Entwicklung von Hefen verhindern.

Derzeit sind von allen herkömmlichen Silierhilfsmitteln, die Fehlgärungen verhindern, nur zwei Möglichkeiten bekannt, die auch eine Verhinderung der aeroben Abbauvorgänge bewirken können:

a) Zusatz von Propionsäure in einer Konzentration, die eine Hefeentwicklung verhindert, z.B. Luprosil [R] - (fungistatische Wirkung), und

b) Zusatz von Konservierungsmitteln mit fungizider Wirkung, z.B. Nitrit und Hexamethylentetramin (Kofasil plus [R]).

Zum weiteren wird in der bereits oben genannten DE-A-25 07 067 = US-A-4,073,889 eine Kombination der Konservierungsstoffe Na-Benzoat bzw. Benzoesäure, Salze der Ameisensäure (Formiate) und Salze der schwefligen Säure in einem variablen Wirkstoffverhältnis beschrieben, die zur Verhinderung von aeroben Abbauvorgängen im Gärfutter verwendet wird. Obwohl hiermit gute Ergebnisse erzielt werden können, ist die Verwendung dieser Konservierungsstoffe bei schwer silierbaren Futterarten wie Leguminosen und Feuchtfutter nicht besonders vorteilhaft.

In der älteren Anmeldung EP-A-0 369 198 ist ein Prozeß zur Futterkonservierung offenbart, bei dem L. plantarum DSM 4904, ggf. unter Zusatz von Formiat, dem Futter zugesetzt wird, wobei als Formiat lediglich Natriumformiat erwähnt ist.

GB-A-2 095 534 offenbart ein Konservierungsmittel für Heu, dessen wesentlicher Bestandteil ein Benzoesäuresalz oder Derivat davon ist und das darüberhinaus ein Säuerungsmittel, wie Mineralsäuren, Ameisensäure oder Formiate gemeinsam mit Phosphorverbindungen enthält. Als fakultativer Bestandteil können auch Milchsäurebakterien zugesetzt werden.

Phosphorverbindungen sollten jedoch generell gemieden werden, der sie sich toxikologisch und ernährungsphysiologisch eher ungünstig auswirken.

In DE-26 13 503 ist ein Verfahren zur Bereitung von Silage unter Anwendung von Calciumformiat beschrieben, wobei Calciumformiat in Anfangskonzentrationen von 1-5 gew.% bezogen auf das zu Silierende Gut eingesetzt werden muß. Geringere Mengen Calciumformiat zeigen lediglich eine schwache wirkung als Silierhilfsmittel.

Zusatz von Milchsäurebakterien allein zur Silage bewirkt Seine ausreichende verbesserte anaerobe Stabilität bei Zuckerarmen Grünfutterpflanzen und gewährleistet auch Seine ausreichende aerobe Stabilitat der Silage.

Die Aufgabe der Erfindung besteht darin, ein Kombinationspräparat als Silierhilfe bereitzustellen, das zum einen durch rasche Milchsäurebildung in der Silage die Entwicklung von Buttersäure bildenden Bakterien (Clostridien) in der Silage verhindert, zum anderen anaerobe Abbauvorgänge nach Abschluß der Gärphase verhindert. Dabei sind an ein solches Mittel, das auch unter Praxisbedingungen risikofrei eine Verhinderung der aeroben Abbauvorgänge in Silagen gewährleistet, folgende Forderungen zu stellen:

1. Völlige Entwicklungshemmung aller Lactat assimilierenden Silagehefen unter aeroben Bedingungen;

2. keine ins Gewicht fallende Wachstumshemmung von Milchsäurebakterien unter anaeroben Bedingungen;

3. kein Abbau oder Inaktivierung der zugesetzten Wirkstoffe während der anaeroben Gärphase;

4. ernährungsphysiologische Unbedenklichkeit bei der Verfütterung solcher diese Zusatzstoffe enthaltenden Silagen;

5. Kosten, die einen wirtschaftlichen Einsatz ermöglichen.

Die Erfinder haben nun überraschend gefunden, daß die zuvor genannten Anforderungen weitgehend von einer Kombination von Milchsäurebakterien und Alkali- und/oder Erdalkaliformiat erfüllt werden.

Die Lösung der Aufgabe der Erfindung erfolgt demnach durch Bereitstellung eines Kombinationspräparates als Silierhilfe zum Einsäuern von Grünfutter und Verhindern von aeroben Abbauvorgängen im Gärfutter, enthaltend Alkali- und/oder Erdalkaliformiate und gegebenenfalls übliche Trägerstoffe und/oder Hilfsstoffe, das dadurch gekennzeichnet ist, daß es

a) im wesentlichen frei ist von Phosphorverbindungen,

b) Milchsäure erzeugende Bakterien enthält, wobei, falls das Präparat als Formiat nur Natriumformiat enthält, die Milchsäure erzeugenden Bakterien L. plantarum DSM 3676 und/oder DSM 3677 sind, und

c) die Alkali- und/oder Erdalkaliformiate, bezogen auf das Gewicht der Trockensilage, in einer Menge von 0.01 bis 1 gew.-%, berechnet als Calciumformiat, enthält.

Gegenstand der Erfindung ist weiter ein kombinationspräparat wie vorstehend definiert, wobei die Milchsäure erzeugenden Bakterien ein Gemisch von Lactobazillus plantarum DSM 3676 und Lactobazillus plantarum DSM 3677 ist, wobei, bezogen auf die Anzahl der Keime, 10 bis 90 % Lactobazillus plantarum DSM 3676 und 90 bis 10 % Lactobazillus plantarum DSM 3677 vorliegen.

Gegenstand der Erfindung ist auch ein Verfahren zur Verhinderung von aeroben Abbauvorgängen im Gärfutter durch Zusatz von Alkali- und/oder Erdalkaliformiaten, das dadurch gekennzeichnet ist, daß dem Futter bei der Einlagerung ein Kombinationspräparat zugesetzt wird, das

a) im wesentlichen frei ist von Phosphorverbindungen,

b) Milchsäure erzeugende Bakterien enthält, wobei, falls das Präparat als Formiat nur Natriumformiat enthält, die Milchsäure erzeugenden Bakterien L. plantarum DSM 3676 und/oder DSM 3677 sind, und

c) die Alkali- und/oder Erdalkaliformiate, bezogen auf das Gewicht der Trockensilage, in einer Menge von 0.01 bis 1 gew.-%, berechnet als Calciumformiat, enthält.

Ein weiterer Gegenstand der Erfindung ist ein Verfahren wie vorstehend beschrieben, wobei als Milchsäure erzeugende Bakterien ein Gemisch von Lactobazillus plantarum DSM 3676 und Lactobazillus plantarum DSM 3677 zugesetzt wird, wobei, bezogen auf die Anzahl der Keime, 10 bis 90 % Lactobazillus plantarum DSM 3676 und 90 bis 10 % Lactobazillus plantarum DSM 3677 vorliegen.

Dabei bedeuten Milchsäure erzeugende Bakterien solche Stämme, die unter den im Silo herrschenden Bedingungen gedeihen und ausreichend Milchsäure produzieren, d.h., die so viel Milchsäure bilden, daß die dadurch verursachte pH-Absenkung keine weitere Entwicklung von Mikroorganismen zuläßt. Geeignete Bakterien sind z.B. solche der Gattung Lactobazillus. Besonders geeignet sind solche der Gattung Lactobazillus plantarum und Subspecies arabinosus. Die in der DE-A-36 16 181 beschriebenen Mikroorganismen Lactobazillus plantarum DSM 3676 und DSM 3677 ergeben besonders gute Ergebnisse, denn sie zeichnen sich durch die besondere Fähigkeit in der Intensität und Geschwindigkeit der Fermentierung von Zuckern, wie sie in Grünfutter vorliegen, bei den üblichen Silagetemperaturen aus. In Bezug auf die Identifizierung und Aufbewahrungsbedingungen der zuvor genannten Mikroorganismen wird auf die DE-A-36 16 181 verwiesen. Während der Züchtung kann gegebenenfalls eine alkalisch wirkende Substanz dem Nährmedium zugesetzt werden, um den pH-Wert nicht zu stark absinken zu lassen. Beispiele für solche alkalische Substanzen sind Kaliumhydroxidlösung, Natriumhydroxidlösung, Sodalösung. Das Abtrennen der Zellen kann in bekannter Weise erfolgen. Beispielsweise können die Zellen in einer Zentrifuge abgetrennt werden. Man kann ihnen anschließend einen Schutzstoff, beispielsweise ein Schutzkolloid, z.B. Milchpulver, zusetzen. Es können auch andere Schutzstoffe, beispielsweise Lactose, Ascorbinsäure verwendet werden. Die Zellen können dann gefriergetrocknet werden. Man erhält ein stabiles Präparat, daß die aktiven Bakterien enthält und lange Zeit ohne Verlust ihrer Aktivität haltbar ist.

Die Bakterien werden zweckmäßig in einer Menge von $10^3$ bis $10^8$ Keimen auf 1 g Trockensubstanz des einzusilierenden Gutes zugesetzt, bevorzugt in einer Menge von $10^4$ bis $10^7$ Keimen pro 1 g.

Neben dem zuvor beschriebenen Gehalt an Milchsäurebakterien weist das erfindungsgemäße Kombinationspräparat einen Gehalt an von 0.01 bis 1 Gew.-%, bezogen auf das Gewicht der Trockensilage, berechnet als Calciumformiat, Alkali- und/oder Erdalkaliformiaten auf. Bevorzugt ist dabei ein Gehalt an Calciumformiat. Bevorzugt beträgt der Gehalt der Trockensilage 0,02 bis 0,6 Gew.-%, besonders bevorzugt 0,05 bis 0,4 Gew.-%, berechnet als Calciumformiat.

Das erfindungsgemäße Kombinationspräparat wird vorteilhafterweise in Form einer streufähigen Mischung der Komponenten dem zu silierenden Gut zugesetzt. Die streufähige Mischung kann direkt vor der Zugabe zu dem zu silierenden Gut durch Mischen der Komponenten hergestellt werden. Die Bakterien bzw. das Bakterienpräparat einerseits und das Formiat andererseits können aber auch getrennt zu dem zu silierenden Gut gegeben werden, wo sie dann gemeinsam ihre Wirkung erzeugen. Es ist aber auch möglich, die streufähige Mischung als fertige Mischung dem Endverbraucher zur Verfügung zu stellen. In diesem Fall ist es vorteilhaft, die Komponenten in einer solchen Form einzusetzen, daß eine nachteilige gegenteilige Beeinflussung der Komponenten ausgeschlossen wird. Dies kann z.B. durch Verwendung einer Schutzumhüllung der Ausgangskomponenten, z.B. durch Mikroverkapselung, geschehen.

Grünfutter, das mit dem Kombinationspräparat gemäß der Erfindung eingesäuert werden kann, ist z.B. Weide- oder Mähweidegras, Luzerne und andere Leguminosen, Kleegrasmischungen unterschiedlichster Trockensubstanzgehalte. Besonders vorteilhafte Ergebnisse werden erzielt beim Einsilieren von leicht angewelkten oder angewelkt und verregneten Futterpflanzen.

Trägerstoffe und/oder Hilfsstoffe, die das Kombinationspräparat gemäß der Erfindung neben den genannten Wirkstoffen enthalten kann, sind z.B. Grünmehl, Trockenschnitzel, Kochsalz, Melasse.

Seitens der Erfinder wurden Vergleichsversuche durchgeführt, die die Überlegenheit des erfindungsgemäßen Kombinationspräparates zeigen. Dazu wurden 1 Liter Laborsilos mit Wiesengras (21,4 % Rohproteingehalt) gefüllt und unter anaeroben Bedingungen bei 25 °C über 144 Gärtage siliert. Hierbei wurden drei Versuchsserien von je fünf Ansätzen durchgeführt, wobei von Trockensubstanzgehalten des als Siliergut eingesetzten Wiesengrases von 14,0, 25,3 und 27,0 Gew.-% Trockensubstanz ausgegangen wurde. Innerhalb einer Versuchsreihe mit gleichem Trockensubstanzgehalt wurden die folgenden Versuche durchgeführt:

1. Silierung ohne Zusatz von Silierhilfsmitteln.

2. Silierung mit Zusatz von Milchsäurebakterien bestehend aus einer Mischung gleicher Mengen der Stämme DSM 3676 und 3677 in einer Menge, daß eine Keimzahl von $10^5$ Keimen auf 1 g des zu silierenden Gutes ausgebracht wurde.

3. Silierung mit Zusatz von 0,4 Gew.-% Calciumformiat bezogen auf die Gewichtsmenge des einzusilierenden Gutes.

4. Silierung unter Zusatz von 0,4 Gew.-% Calciumformiat und Milchsäurebakterien in einer Menge, die $10^5$ Keimen auf 1 g des einzusilierenden Gutes entsprach.

In der Versuchsreihe 3 mit einem Trockensubstanzgehalt von 27,0 Gew.-% wurde ein zusätzlicher Silierversuch mit Zusatz von Milchsäurebakterien in einer Keimzahl von $10^6$ Keimen auf 1 g Trockensubstanz durchgeführt.

Die Ergebnisse der Silierversuche sind in der folgenden Tabelle gezeigt.

## Tabelle 1

|  | Tr.% | Gärgasverl. % d.Tr. | MS % | ES % | BS % | pH | NH$_3$/N |
|---|---|---|---|---|---|---|---|
| | | | Versuchsreihe 1 | | | | |
| ohne Zusatz | 14,0 | 7,7 | 0,53 | 1,02 | 0,05 | 4,9 | 18,4 |
| Lactobaz. 10$^5$ | 14,0 | 7,5 | 0,54 | 1,00 | 0,05 | 4,8 | 20,2 |
| Cafo 0,4 % | 14,0 | 3,4 | 2,07 | 0,43 | 0 | 4,2 | 12,7 |
| Cafo 0,4 % + Lactobaz.10$^5$ | 14,0 | 2,0 | 2,36 | 0,31 | 0 | 3,9 | 9,0 |
| | | | Versuchsreihe 2 | | | | |
| ohne Zusatz | 25,3 | 6,0 | 1,78 | 0,89 | 0 | 4,4 | 9,8 |
| Lactobaz. 10$^5$ | 25,3 | 6,3 | 1,20 | 1,07 | 0 | 4,6 | 10,4 |
| Cafo 0,4 % | 25,3 | 5,1 | 2,64 | 0,63 | 0 | 4,2 | 9,5 |
| Cafo 0,4 % + Lactobaz.10$^5$ | 25,3 | 3,9 | 2,71 | 0,56 | 0 | 4,2 | 8,2 |
| | | | Versuchsreihe 3 | | | | |
| ohne Zusatz | 27,0 | 6,3 | 2,13 | 1,18 | 0,04 | 4,5 | 9,7 |
| Lactobaz. 10$^5$ | 27,0 | 4,0 | 2,99 | 0,55 | 0,05 | 4,1 | 8,6 |
| Lactobaz. 10$^6$ | 27,0 | 3,5 | 3,56 | 0,50 | 0 | 4,1 | 7,6 |
| Cafo 0,4 % | 27,0 | 4,3 | 2,57 | 0,76 | 0 | 4,3 | 7,7 |
| Cafo 0,4 % + Lactobaz.10$^5$ | 27,0 | 3,4 | 2,95 | 0,48 | 0 | 4,1 | 4,4 |

Erläuterungen:

Tr.: Angabe des Gehaltes an Trockensubstanz in Gew.-%.

Gärgasverl. % d.Tr.: Im Verlauf des Siliervorganges auftretende Verluste

an Gärgas in Gew.-% der Trockenmasse.

MS: Angabe der im Verlauf des Gärvorganges entstehenden Milchsäure in Gew.-%.

ES: Angabe der im Verlauf des Gärvorganges entstehenden Essigsäure in Gew.-%.

BS: Angabe der im Verlauf des Gärvorganges entstehenden Buttersäure in Gew.-%.

pH: Am Ende des Siliervorganges gemessener pH-Wert.

$NH_3$/N: Verhältnis von im Verlauf des Siliervorganges gebildeten Ammoniak in Gewichtsteilen zu im Siliergut noch vorhandenem gebundenen Stickstoff.

Die in der Tabelle zusammengestellten Ergebnisse der Silierung zeigen deutlich, daß bei Verwendung des erfindungsgemäßen Kombinationspräparates ein synergistischer Effekt zu beobachten ist. Insbesondere die gemessenen Werte an Gärgasverlusten, an gebildeter Milchsäure und Essigsäure liegen weit über den sich aus reiner Addition der für die Zugabe der Einzelkomponenten ergebenden Werte. Der Vergleich der Silierungen des zu silierenden Gutes mit verschiedenen Gehalten an Trockensubstanz zeigt die universelle Verwendbarkeit bei gleichbleibend guten Silierergebnissen.

Das Kombinationspräparat gemäß der Erfindung kann zusätzlich Propionsäure, Sorbinsäure und/oder Benzoesäure und deren Salze enthalten, wie sie üblicherweise in Präparaten als Silierhilfe zum Einsäuern von Grünfutter verwendet werden, und/oder hierfür erlaubte andere biologische Konservierungsmittel, insbesondere Salze verträglicher organischer Säuren. Propionsäure oder deren Salze sollten zweckmäßig in einer Menge von weniger als 0,5 Gew.-%, vorzugsweise weniger als 0,4 Gew.-%, berechnet als freie Säure und bezogen auf das Gewicht der Trockensilage zugesetzt werden. Bei Sorbinsäure liegen die entsprechenden Mengen maximal bei etwa 0,05 Gew.-%, besonders bevorzugt bei etwa 0,04 Gew.-%. Bei Zusatz dieser Stoffe und/oder der oben erwähnten Trägerstoffe und/oder Hilfsstoffe, insbesondere Grünmehl, Trockenschnitzel, Kochsalz, kann die Menge an Alkali- und/oder Erdalkaliformiaten, wie sie oben als zweckmäßig oder bevorzugt angegeben ist, beträchtlich, und zwar um bis zu etwa jeweils 50 % gesenkt werden.

**Patentansprüche**
**Patentansprüche für folgende Vertragsstaaten : DE, GB, FR, SE, CH, LI, AT**

1. Kombinationspräparat als Silierhilfe zum Einsäuern von Grünfutter und Verhindern von aeroben Abbauvorgängen im Gärfutter, enthaltend Alkali- und/oder Erdalkaliformiate und gegebenenfalls übliche Trägerstoffe und/oder Hilfsstoffe, **dadurch gekennzeichnet,** daß es
a) im wesentlichen frei ist von Phosphorverbindungen,
b) Milchsäure erzeugende Bakterien enthält, wobei, falls das Präparat als Formiat nur Natriumformiat enthält, die Milchsäure erzeugenden Bakterien L. plantarum DSM 3676 und/oder DSM 3677 sind, und
c) die Alkali- und/oder Erdalkaliformiate, bezogen auf das Gewicht der Trockensilage, in einer Menge von 0.01 bis 1 gew.-%, berechnet als Calciumformiat, enthält.

2. Kombinationspräparat nach Anspruch 1, dadurch gekennzeichnet, daß die Milchsäure erzeugenden Bakterien solche der Gattung Lactobazillus plantarum sind.

3. Kombinationspräparat nach Anspruch 1, dadurch gekennzeichnet, daß die Milchsäure erzeugenden Bakterien Lactobazillus plantarum DSM 3676 und/oder Lactobazillus plantarum DSM 3677 sind.

4. Kombinationspräparat nach Anspruch 1, dadurch gekennzeichnet, daß die Milchsäure erzeugenden Bakterien ein Gemisch von Lactobazillus plantarum DSM 3676 und Lactobazillus plantarum DSM 3677 ist, wobei, bezogen auf die Anzahl der Keime, 10 bis 90 % Lactobazillus plantarum DSM 3676 und 90 bis 10 % Lactobazillus plantarum DSM 3677 vorliegen.

5. Kombinationspräparat nach einem oder mehreren der Ansprüche 1 bis 4, dadurch gekennzeichnet, daß das Formiat Calciumformiat ist.

6. Verfahren zur Herstellung eines Kombinationspräparates nach einem der Ansprüche 1 bis 5, dadurch gekennzeichnet, daß die Milchsäure erzeugenden Bakterien in gefriergetrockneter Form mit den Alkali- und/oder Erdalkaliformiaten, eines oder beide gegebenenfalls mit einer Schutzumhüllung versehen, sowie gegebenenfalls mit üblichen Trägerstoffen und/oder Hilfsstoffen vermischt werden.

7. Verfahren zur Verhinderung von aeroben Abbauvorgängen im Gärfutter durch Zusatz von Alkali- und/oder Erdalkaliformiaten, dadurch gekennzeichnet, daß dem Futter bei der Einlagerung ein Kombinationspräparat zugesetzt wird, das

a) im wesentlichen frei ist von Phosphorverbindungen,

b) Milchsäure erzeugende Bakterien enthält, wobei, falls das Präparat als Formiat nur Natriumformiat enthält, die Milchsäure erzeugenden Bakterien L. plantarum DSM 3676 und/oder DSM 3677 sind, und

c) die Alkali- und/oder Erdalkaliformiate, bezogen auf das Gewicht der Trockensilage, in einer Menge von 0.01 bis 1 gew.-%, berechnet als Calciumformiat, enthält.

8. Verfahren nach Anspruch 7, dadurch gekennzeichnet, daß als Milchsäure erzeugende Bakterien solche der Gattung Lactobazillus plantarum zugesetzt werden.

9. Verfahren nach Anspruch 7, dadurch gekennzeichnet, daß als Milchsäure erzeugende Bakterien Lactobazillus plantarum DSM 3676 und/oder Lactobazillus plantarum DSM 3677 zugesetzt werden.

10. Verfahren nach Anspruch 7, dadurch gekennzeichnet, daß als Milchsäure erzeugende Bakterien ein Gemisch von Lactobazillus plantarum DSM 3676 und Lactobazillus plantarum DSM 3677 zugesetzt wird, wobei, bezogen auf die Anzahl der Keime, 10 bis 90 % Lactobazillus plantarum DSM 3676 und 90 bis 10 % Lactobazillus plantarum DSM 3677 vorliegen.

11. Verfahren nach einem oder mehreren der Ansprüche 7 bis 10, dadurch gekennzeichnet, daß als Alkali- und/oder Erdalkaliformiat Calciumformiat zugesetzt wird.

12. Verfahren nach einem oder mehreren der Ansprüche 7 bis 11, dadurch gekennzeichnet, daß die Milchsäure erzeugenden Bakterien in einer Menge von $10^3$ bis $10^8$ Keimen auf 1 g Trockensubstanz des Siliergutes zugesetzt werden.

13. Verfahren nach einem oder mehreren der Ansprüche 7 bis 11, dadurch gekennzeichnet, daß dem Siliergut die Milchsäure erzeugenden Bakterien in einer Menge von $10^4$ bis $10^7$ Keimen auf 1 g Trockensubstanz des Siliergutes zugesetzt werden.

14. Verfahren nach einem oder mehreren der Ansprüche 7 bis 13, dadurch gekennzeichnet, daß die Alkali- und/oder Erdalkaliformiate, bezogen auf das Gewicht der Trockensilage, in einer Menge von 0,02 bis 0,6 Gew.-%, besonders bevorzugt 0,05 bis 0,4 Gew.-%, berechnet als Calciumformiat, zugesetzt werden.

15. Verwendung des Kombinationspräparates nach Anspruch 1 als Silierhilfe zum Einsäuern von Grünfutter und Verhindern von aeroben Abbauvorgängen.

**Claims**

**Claims for the following Contracting States : DE, GB, FR, SE, CH, LI, AT**

1. Combined preparation as an ensiling aid for ensiling green fodder and preventing aerobic degradation processes in the silage feed, which preparation contains alkali-metal and/or alkaline-earth metal formates and optionally customary carriers and/or auxiliary substances, characterised in that it

a) contains substantially no phosphorus compounds,

b) contains lactic acid bacteria, wherein, should the sole formate contained in the preparation be sodium formate, the lactic acid bacteria are *L. plantarum* DSM 3676 and/or DSM 3677, and

c) contains the alkali-metal and/or alkaline-earth metal formates in a quantity, relative to the weight of the dry silage, of 0.01 to 1 wt.% calculated as calcium formate.

2. Combined preparation according to claim 1, characterised in that the lactic acid bacteria are those of the genus *Lactobacillus plantarum*.

3. Combined preparation according to claim 1, characterised in that the lactic acid bacteria are *Lactobacillus plantarum* DSM 3676 and/or *Lactobacillus plantarum* DSM 3677.

4. Combined preparation according to claim 1, characterised in that the lactic acid bacteria comprise a mixture of *Lactobacillus plantarum* DSM 3676 and *Lactobacillus plantarum* DSM 3677, wherein, relative to the bacterial count, 10 to 90% of *Lactobacillus plantarum* DSM 3676 and 90 to 10% of *Lactobacillus plantarum* DSM 3677 are present.

5. Combined preparation according to one or more of claims 1 to 4, characterised in that the formate is calcium formate.

6. Process for the production of a combined preparation according to one of claims 1 to 5, characterised in that the lactic acid bacteria are mixed in freeze-dried form with the alkali-metal and/or alkaline-earth metal formates, one or both of which are optionally provided with a protective coating, optionally together with customary carriers and/or auxiliary substances.

7. Process for the prevention of aerobic degradation processes in silage fodder by the addition of alkali-metal and/or alkaline-earth metal formates, characterised in that a combined preparation is added to the fodder on introduction into the clamp, which preparation

a) contains substantially no phosphorus compounds,

b) contains lactic acid bacteria, wherein, should the sole formate contained in the preparation be sodium formate, the lactic acid bacteria are *L. plantarum* DSM 3676 and/or DSM 3677, and

c) contains the alkali-metal and/or alkaline-earth metal formates in a quantity, relative to the weight of the dry silage, of 0.01 to 1 wt.% calculated as calcium formate.

8. Process according to claim 7, characterised in that the lactic acid bacteria added are those of the genus *Lactobacillus plantarum*.

9. Process according to claim 7, characterised in that the lactic acid bacteria added are *Lactobacillus plantarum* DSM 3676 and/or *Lactobacillus plantarum* DSM 3677.

10. Process according to claim 7, characterised in that the lactic acid bacteria added comprise a mixture of *Lactobacillus plantarum* DSM 3676 and *Lactobacillus plantarum* DSM 3677, wherein, relative to the bacterial count, 10 to 90% of *Lactobacillus plantarum* DSM 3676 and 90 to 10% of *Lactobacillus plantarum* DSM 3677 are present.

11. Process according to one or more of claims 7 to 10, characterised in that calcium formate is added as the alkali-metal or alkaline-earth metal formate.

12. Process according to one or more of claims 7 to 11, characterised in that the lactic acid bacteria are added in a quantity of $10^3$ to $10^8$ bacteria per 1 g of dry matter of the material to be ensiled.

13. Process according to one or more of claims 7 to 11, characterised in that the lactic acid bacteria are added in a quantity of $10^4$ to $10^7$ bacteria per 1 g of dry matter of the material to be ensiled.

**14.** Process according to one or more of claims 7 to 13, characterised in that the alkali-metal and/or alkaline-earth metal formates are added in a quantity, relative to the weight of the dry silage, of 0.02 to 0.6 wt.%, particularly preferably from 0.05 to 0.4 wt.%, calculated as calcium formate.

**15.** Use of the combined preparation according to claim 1 as an ensiling aid for ensiling green fodder and preventing aerobic degradation processes.

**Revendications**

**Revendications pour les Etats contractants suivants : DE, GB, FR, SE, CH, LI, AT**

**1.** Composition combinée comme adjuvant d'ensilage pour l'ensilage de fourrage vert et l'inhibition des processus de dégradation aérobies dans le fourrage vert, contenant des formiates de métaux alcalins et/ou alcalino-terreux et le cas échéant des supports et/ou additifs habituels, caractérisée en ce que
   a) elle est sensiblement dépourvue de composés de phosphore,
   b) elle contient des bactéries productrices d'acide lactique et, si la préparation ne contient comme formiate que le formiate de sodium, les bactéries productrices d'acide lactique sont L. plantarum DSM 3676 et/ou DSM 3677, et
   c) elle contient les formiates de métaux alcalins et/ou alcalino-terreux, par rapport au poids du fourrage ensilé sec, en une quantité de 0,01 à 1% en poids, calculée sous forme de formiate de calcium.

**2.** Composition combinée selon la revendication 1, caractérisée en ce que les bactéries productrices d'acide lactique sont celles du genre Lactobacillus plantarum.

**3.** Composition combinée selon la revendication 1, caractérisée en ce que les bactéries productrices d'acide lactique sont Lactobacillus plantarum DSM 3676 et/ou Lactobacillus plantarum DSM 3677.

**4.** Composition combinée selon la revendication 1, caractérisée en ce que les bactéries productrices d'acide lactique sont un mélange de Lactobacillus plantarum DSM 3676 et de Lactobacillus plantarum DSM 3677, où l'on a, par rapport au nombre de germes, de 10 à 90% de Lactobacillus plantarum DSM 3676 et de 90 à 10% de Lactobacillus plantarum DSM 3677.

**5.** Composition combinée selon une ou plusieurs des revendications 1 à 4, caractérisée en ce que le formiate est le formiate de calcium.

**6.** Procédé de préparation d'une composition combinée selon l'une des revendications 1 à 5, caractérisé en ce que les bactéries productrices d'acide lactique sont mélangées sous forme lyophilisée avec les formiates de métaux alcalins et/ou alcalino-terreux, l'un ou les deux éventuellement avec enrobage protecteur, ainsi que le cas échéant avec des supports et/ou adjuvants habituels.

**7.** Procédé pour inhiber les processus de dégradation aérobie dans le fourrage ensilé par addition de formiates de métaux alcalins et/ou alcalino-terreux, caractérise en ce qu'on ajoute au fourrage lors de l'emmagasinage une composition combinée qui
   a) est sensiblement dépourvue de composés de phosphore,
   b) contient des bactéries productrices d'acide lactique et, si la préparation ne contient comme formiate que le formiate de sodium, les bactéries productrices d'acide lactique sont L. plantarum DSM 3676 et/ou DSM 3677,
   et
   c) contient les formiates de métaux alcalins et/ou alcalino-terreux, par rapport au poids du fourrage ensilé sec, en une quantité de 0,01 à 1% en poids, calculée sous forme de formiate de calcium.

**8.** Procédé selon la revendication 7, caractérisé en ce qu'on ajoute comme bactéries productrices d'acide lactique celles du genre Lactobacillus plantarum.

**9.** Procédé selon la revendication 7, caractérisé en ce qu'on ajoute comme bactéries productrices d'acide lactique Lactobacillus plantarum DSM 3676 et/ou Lactobacillus plantarum DSM 3677.

**10.** Procédé selon la revendication 7, caractérisé en ce qu'on ajoute comme bactéries productrices d'acide lactique un mélange de <u>Lactobacillus</u> <u>plantarum</u> DSM 3676 et de <u>Lactobacillus</u> <u>plantarum</u> DSM 3677, où l'on a, quant au nombre de germes, de 10 à 90% de <u>Lactobacillus</u> <u>plantarum</u> DSM 3676 et de 90 à 10% de <u>Lactobacillus</u> <u>plantarum</u> DSM 3677.

**11.** Procédé selon une ou plusieurs des revendications 7 à 10, caractérisé en ce qu'on ajoute comme formiate de métal alcalin et/ou alcalino-terreux le formiate de calcium.

**12.** Procédé selon une ou plusieurs des revendications 7 à 11, caractérisé en ce qu'on ajoute les bactéries productrices d'acide lactique en une quantité de $10^3$ à $10^8$ germes pour 1 g de substance sèche de la matière à ensiler.

**13.** Procédé selon une ou plusieurs des revendications 7 à 11, caractérisé en ce qu'on ajoute à la matière à ensiler les bactéries productrices d'acide lactique en une quantité de $10^4$ à $10^7$ germes pour 1 g de substance sèche de la matière à ensiler.

**14.** Procédé selon une ou plusieurs des revendications 7 à 13, caractérisé en ce qu'on ajoute les formiates de métaux alcalins et/ou alcalino-terreux, par rapport au poids du fourrage ensilé sec, en une quantité de 0,02 à 0,6% en poids, en particulier de préférence de 0,05 à 0,4% en poids, calculés sous forme de formiate de calcium.

**15.** Application de la composition combinée selon la revendication 1 comme adjuvant d'ensilage afin d'ensiler le fourrage vert et d'inhiber les processus de dégradation aérobies.